# EUROPÄISCHE PATENTSCHRIFT

(11) **EP 3 099 962 B1**
(45) Veröffentlichungstag und Bekanntmachung des Hinweises auf die Patenterteilung: **14.02.2018**
(21) Anmeldenummer: 14827433.5
(22) Anmeldetag: 19.12.2014
(51) Int. Cl.: F16J 15/08

(54) **ZYLINDERKOPFDICHTUNG SOWIE EIN EINE SOLCHE UMFASSENDES ABDICHTSYSTEM**
CYLINDER-HEAD SEAL, AND A SEALING SYSTEM COMPRISING SUCH A SEAL
JOINT DE CULASSE ET SYSTÈME D'ÉTANCHÉITÉ COMPRENANT LEDIT JOINT DE CULASSE

(30) Priorität: 28.01.2014 DE 102014100948
(43) Veröffentlichungstag der Anmeldung: 07.12.2016
(73) Patentinhaber: ElringKlinger AG, 72581 Dettingen (DE)
(72) Erfinder: BRAUN, Matthias, 72762 Reutlingen (DE)
(74) Vertreter: Hoeger, Stellrecht & Partner Patentanwälte mbB
(86) Internationale Anmeldenummer: PCT/EP2014/078697
(87) Internationale Veröffentlichungsnummer: WO 2015/113711

(56) Entgegenhaltungen:
- DE-A1- 19 606 382
- DE-A1-102005 052 614

## Beschreibung

Die Erfindung betrifft eine Zylinderkopfdichtung mit einer länglichen, mehrlagigen metallischen Dichtungsplatte, welche mehrere Brennraumöffnungen, Fluid-Durchgangsöffnungen und Schraubenlöcher für den Durchtritt von Zylinderkopfschrauben sowie eine Trägerlage und mindestens eine Funktionslage aufweist, welche mit die Brennraumöffnungen umschließenden Brennraum-Abdichtsicken sowie mit mindestens einer als Halbsicke gestalteten Fluid-Abdichtsicke versehen ist, die (in einer Draufsicht auf die Dichtungsplatte) auf der von den Brennraumöffnungen abgewandten Seite der Brennraum-Abdichtsicken im Abstand von den Letzteren angeordnet ist sowie einen gegen die Trägerlage anzupressenden ersten Sickenfuß und einen zweiten Sickenfuß besitzt.

Aus der DE 196 06 382 A1, und zwar aus deren Figuren 1 und 2, ergibt sich eine Zylinderkopfdichtung mit einer länglichen, mehrlagigen metallischen Dichtungsplatte, welche mehrere Brennraumöffnungen, Fluid-Durchgangsöffnungen und Schraubenlöcher für den Durchtritt von Zylinderkopfschrauben sowie eine Trägerlage und zwei Funktionslagen aufweist, zwischen denen die Trägerlage angeordnet und welche mit die Brennraumöffnungen umschließenden Brennraum-Abdichtsicken sowie mit jeweils einer Halbsicke versehen sind; jede dieser Halbsicken besitzt einen gegen die Trägerlage anzupressenden ersten Sickenfuß sowie einen zweiten Sickenfuß. In einer Draufsicht auf die Dichtungsplatte sind die Halbsicken der beiden Funktionslagen übereinander und im Abstand von den gleichfalls übereinanderliegenden Brennraum-Abdichtsicken der beiden Funktionslagen zwischen den Brennraum-Abdichtsicken und einem Außenrand der Dichtungsplatte angeordnet. Da die besagten Halbsicken in der DE 196 06 382 A1 nicht beschrieben und in deren eine Draufsicht auf die Zylinderkopfdichtung darstellenden Fig. 1 auch nicht gezeigt sind, lassen sich diesem Dokument die Funktion und Natur dieser Halbsicken nicht entnehmen.

Zylinderkopfdichtungen der eingangs definierten Art sind jedoch durch auf dem Markt verfügbare Zylinderkopfdichtungen bekannt geworden.

Bei einer solchen Zylinderkopfdichtung handelt es sich bei den Fluid-Durchgangsöffnungen um Durchgangsöffnungen für Kühlwasser und/oder Motoröl, unter einer Funktionslage versteht der Dichtungsfachmann eine Blechlage, in welche Sicken mit federelastischen Eigenschaften eingeprägt sind (meist besteht eine Funktionslage aus einem Federstahlblech), während die Trägerlage üblicherweise keine federelastischen Eigenschaften benötigt, im Wesentlichen eben ist, gegebenenfalls aber auch an einer oder mehreren Stellen abgekröpft sein kann, und eine größere Materialdicke aufweist als eine Funktionslage, und die die Fluid-Abdichtsicken bildenden Halbsicken sind jeweils endlos und in sich geschlossen (in einer Draufsicht auf die Dichtungsplatte).

In Funktionslagen von Zylinderkopfdichtungen vorgesehene Abdichtsicken müssen dauerhaft federelastische Eigenschaften haben, das heißt die Höhe einer solchen Abdichtsicke muss sich durch auf Letztere einwirkende Pressungskräfte stets federelastisch so verringern lassen, dass die Sickenhöhe bei einer Abnahme der Pressungskräfte federelastisch wieder zunimmt; dies ist aus folgenden Gründen erforderlich, damit die Abdichtsicke ihre Abdichtfunktion dauerhaft erfüllen kann: Die Motorbauteile (Motorblock und Zylinderkopf), und zwar vor allem der Zylinderkopf, können nicht als absolut starre Bauteile betrachtet werden, und der Zylinderkopf wird auch nur punktuell, nämlich durch die Zylinderkopfschrauben, mit dem Motorblock verbunden, so dass die auf die zwischen Zylinderkopf und Motorblock eingespannte Zylinderkopfdichtung einwirkenden Pressungskräfte primär lokal (nämlich in den Bereichen der Zylinderkopfschrauben) in die Zylinderkopfdichtung eingeleitet werden. Dies hat zur Folge, dass ohne besondere Maßnahmen die der Zylinderkopfdichtung zugewandte Dichtfläche des montierten Zylinderkopfs aufgrund von Verzügen des Zylinderkopfs nicht mehr eben ist bzw. nicht in einer Ebene liegt und die auf die Zylinderkopfdichtung einwirkenden Pressungskräfte mit zunehmenden Abständen von den Zylinderkopfschrauben abnehmen - schon allein deshalb weist der durch die Zylinderkopfdichtung abzudichtende Dichtspalt zwischen Motorblock und Zylinderkopf nicht überall dieselbe Weite oder Höhe auf. Im Motorbetrieb kommen hinzu lokale dynamische Änderungen der Weite des Dichtspalts, hervorgerufen durch die sich zyklisch ändernden und auf den Zylinderkopf lokal einwirkenden Gasdrücke der in den Zylindern gezündeten Gase, aber auch quasistatische Dichtspaltänderungen, welche dadurch verursacht werden, dass die genannten Motorbauteile relativ zueinander, aber auch lokal unterschiedlichen Wärmeausdehnungen unterworfen sind.

Damit Brennraumöffnungen umschließende Brennraum-Abdichtsicken von Funktionslagen der Zylinderkopfdichtungen bei der Motormontage, aber auch im Motorbetrieb nicht übermäßig abgeflacht werden und dadurch ihre federelastischen Eigenschaften ganz oder teilweise verlieren oder sogar das Risiko entsteht, dass im Laufe des Motorbetriebs in einer Funktionslage in einem Sickenbereich Risse entstehen, ist es üblich, in Zylinderkopfdichtungen den Brennraum-Abdichtsicken zugeordnete und diesen Sicken unmittelbar benachbarte Verformungsbegrenzer (im Folgenden als Stopper bezeichnet) vorzusehen. Außerdem weisen Zylinderkopfdichtungen häufig sogenannte Hinterlandstopper auf, mit deren Hilfe Zylinderkopfverzügen entgegengewirkt werden soll und die (in einer Draufsicht auf die Zylinderkopfdichtung) auf den von den Brennraumöffnungen abgewandten Seiten der Brennraum-Abdichtsicken und in Abständen von den Letzteren angeordnet sind, insbesondere in den Längsendbereichen einer Zylinderkopfdichtung für einen Mehrzylindermotor.

Da nach der Montage einer Zylinderkopfdichtung eine gepresste Abdichtsicke einer Funktionslage beträchtliche Rückstellkräfte ausüben muss, um im Motorbetrieb eine ausreichende Abdichtung gewährleisten zu können, versuchen die Abdichtsicken, den Dichtspalt zwischen Zylinderkopf und Motorblock in den Sickenbereichen lokal aufzuweiten; diese Tendenz besteht vor allem in solchen Bereichen der Zylinderkopfdichtung, in welchen mehrere Abdichtsicken einander benachbart verlaufen (in einer Draufsicht auf die Zylinderkopfdichtung), so wie dies insbesondere in der Nachbarschaft von Zylinderkopfschrauben der Fall ist - dort verlaufen oft einander unmittelbar benachbart Abdicht- und/oder Abstützsicken, insbesondere sowohl eine Fluid-Abdichtsicke für Kühlwasser als auch eine Fluid-Abdichtsicke für Motoröl.

Weil, wie bereits erwähnt, die Kräfte für die Verspannung von Zylinderkopf, Motorblock und Zylinderkopfdichtung nur lokal, nämlich durch die Zylinderkopfschrauben in das Abdichtsystem eingeleitet werden, wird aus noch zu erörternden Gründen angestrebt, dass im Zuge der Motormontage beim Anziehen der Zylinderkopfschrauben in deren Bereichen der Zylinderkopf, die Lagen der Zylinderkopfdichtung und der Motorblock "auf Block gepresst" werden, das heißt dass in den Bereichen der Zylinderkopfschrauben die Lagen der Zylinderkopfdichtung sowie die Letzterer zugewandten Dichtflächen von Zylinderkopf und Motorblock spaltfrei gegeneinander gepresst werden und dort die Zylinderkopfdichtung flächig gepresst wird. Unter modernen Motoren gibt es jedoch solche, bei denen die durch die Zylinderkopfschrauben aufgebrachten Kräfte nicht ausreichen, um den Zylinderkopf in allen, den Zylinderkopfschrauben unmittelbar benachbarten Bereichen auf Block ziehen zu können, so dass in diesen Bereichen jeweils ein kleiner Spalt zwischen dem Zylinderkopf und der Zylinderkopfdichtung, gegebenenfalls aber auch zwischen Letzterer und dem Motorblock verbleibt und infolgedessen dort keine flächige Verpressung zwischen der Zylinderkopfdichtung und vor allem dem Zylinderkopf erreicht wird. Dies kann im Motorbetrieb zu einer Vergrößerung der zeitlichen Schwankungen der Dichtspaltweite und zu vergleichsweise größeren Relativbewegungen zwischen Zylinderkopf und Motorblock (sogenannte Schiebebewegungen in der Dichtspaltebene) führen, woraus das Risiko der Bildung von Rissen in den Funktionslagen in deren Sickenbereichen und ein erhöhter Verschleiß an den gegeneinander abdichtenden Bereichen des Abdichtsystems resultieren kann. Die Ursachen dafür, dass sich mit den Zylinderkopfschrauben in manchen Schraubenbereichen die gewünschte flächige Verpressung der Zylinderkopfdichtung zwischen dem Zylinderkopf und dem Motorblock nicht erreichen lässt, sind die Folgenden (einzeln oder in Kombination): den Schraubenkräften entgegenwirkende Rückstellkräfte von Abdichtsicken, insbesondere wenn die Zylinderkopfdichtung in der Nachbarschaft einer Zylinderkopfschraube mehrere Abdichtsicken aufweist - dies gilt vor allem dann, wenn der Zylinderkopf in der Nähe von Zylinderkopfschrauben auch noch durch den Brennraum-Abdichtsicken zugeordnete Stopper (sogenannte Brennraumstopper) abgestützt wird. Weist die Zylinderkopfdichtung außer Brennraumstoppern auch noch den Zylinderkopf abstützende Hinterlandstopper auf, wirken einer flächigen Verpressung der Zylinderkopfdichtung zwischen dem Zylinderkopf und dem Motorblock in manchen Schraubenbereichen sowohl in diesen Bereichen vorhandene Abdichtsicken, als auch die Brennraumstopper und die Hinterlandstopper entgegen.

Man könnte nun daran denken, eine flächige Pressung der Zylinderkopfdichtung zwischen Zylinderkopf und Motorblock in den erwähnten Schraubenbereichen dadurch zu erreichen, dass die Federkraft der Abdichtsicken, insbesondere der Fluid-Abdichtsicke bzw. -Abdichtsicken durch eine entsprechende Sickengestaltung reduziert wird; dies verbietet sich jedoch im Allgemeinen deshalb, weil wegen der im Motorbetrieb unvermeidlichen, vorstehend beschriebenen dynamischen und quasistatischen Aufweitungen des Dichtspalts verhältnismäßig hohe Sickenkräfte notwendig sind, damit die Abdichtsicke bzw. -sicken ihre Abdichtfunktion stets zuverlässig erfüllen kann bzw. können (eine Reduzierung der Sickenkraft nur in den Schraubenbereichen dadurch, dass man bei der Herstellung der Sicke deren Höhe entlang der Sicke variiert, ist aus herstellungstechnischen Gründen im Allgemeinen nicht empfehlenswert).

Zu beachten ist auch das Folgende: Bei der Montage des Zylinderkopfs wird die Zylinderkopfdichtung nach dem vorschriftsmäßigen Anziehen der Zylinderkopfschrauben mit den höchsten Schraubenkräften, das heißt Pressungskräften beaufschlagt, welche jedoch nach der ersten Inbetriebnahme des Motors deutlich geringer sind (beispielsweise um ca. 15 % bei warmem und um ca. 20 bis 35 % bei kaltem Motor), und zwar aufgrund von Setzungserscheinungen an den Motorbauteilen und einer gewissen Längung der Zylinderkopfschrauben bei der ersten Inbetriebnahme des Motors. Dem muss durch entsprechend höhere Schraubenkräfte bei der Montage des Zylinderkopfs Rechnung getragen werden, damit die Abdichtsicken im Motorbetrieb ihre Abdichtfunktion dauerhaft erfüllen können; durch diese höheren, bei der Montage des Zylinderkopfs aufgebrachten Schraubenkräfte wurden bisher die Fluid-Abdichtsicken jedoch stärker verformt (abgeflacht) als dies im Motorbetrieb der Fall ist, und es hat sich gezeigt, dass durch diese stärkere Abflachung der Abdichtsicken deren Dauerhaltbarkeit reduziert wird. Dem kann zwar dadurch entgegengewirkt werden, dass man die Zylinderkopfdichtung mit Hinterlandstoppern versieht, um die Abflachung der Fluid-Abdichtsicken bei der Montage des Zylinderkopfs zu begrenzen, jedoch erhöhen Hinterlandstopper die Herstellkosten einer Zylinderkopfdichtung, und vor allem bei modernen Motoren ist es nicht selten aus Platzgründen problematisch oder gar unmöglich, in einer Zylinderkopfdichtung Hinterlandstopper dort unterzubringen, wo sie benötigt würden, um übermäßige Abflachungen der Fluid-Abdichtsicken bei der Montage des Zylinderkopfs zu verhindern.

Schließlich wird noch auf Folgendes hingewiesen: Wie sich aus dem Vorstehenden ergibt, liegen in den erwähnten Schraubenbereichen ohne eine problematische Höhenprofilierung der Fluid-Abdichtsicken unnötig hohe oder sogar nachteilige übermäßige Sickenkräfte vor, welche einen Teil der Schraubenkräfte beanspruchen, der an anderen Stellen der Motorbauteile bzw. der Zylinderkopfdichtung dringend benötigt wird, um dort gegen hohe Mediendrücke, insbesondere der Brenngase, aber auch des unter Druck stehenden Motoröls zuverlässig abzudichten.

Der Erfindung lag nun die Aufgabe zugrunde, eine Zylinderkopfdichtung der eingangs erwähnten Art so zu gestalten, dass die vorstehend beschriebenen Probleme des Standes der Technik alle oder zumindest zum Teil beseitigt oder wenigstens minimiert werden.

Dies lässt sich vorteilhafterweise dadurch erreichen, dass die Trägerlage der Zylinderkopfdichtung mindestens auf ihrer der wenigstens einen, ersten Funktionslage zugewandten ersten Lagenseite mindestens in manchen ihrer Bereiche, welche Schraubenlöchern benachbart sind, wenigstens eine sich längs des ersten Sickenfußes erstreckende langgestreckte und flache Vertiefung mit einer solchen Breite aufweist, dass (in einer Draufsicht auf die Dichtungsplatte) über der Vertiefung nur ein streifenförmiger Bereich der ersten Funktionslage liegt, welcher von der Halbsicke nur deren ersten Sickenfuß, jedoch nicht den zweiten Sickenfuß enthält.

Bei besonders vorteilhaften Ausführungsformen der Erfindung weist die Trägerlage auf ihrer der wenigstens einen, ersten Funktionslage zugewandten ersten Lagenseite eine solche vorstehend erwähnte Vertiefung bzw. Vertiefungen nur in solchen Schraubenloch-nahen Bereichen ihrer Dichtungsplatte auf, in denen in der unmittelbaren Nachbarschaft eines Schraubenlochs eine oder mehrere Sicken verlaufen, insbesondere eine oder mehrere Fluid-Abdichtsicken.

Bei der durch die vorliegende Erfindung vorgeschlagene Zylinderkopfdichtung wird es sich bei der Fluid-Abdichtsicke üblicherweise um eine endlose, das heißt in sich geschlossene Halbsicke handeln, während die in der Trägerlage vorgesehene und sich längs des ersten Sickenfußes erstreckende Vertiefung vorzugsweise gleichfalls endlos und (in einer Draufsicht auf die Dichtungsplatte) in sich geschlossen ist, aber auch diskontinuierlich gestaltet sein und beispielsweise von in Längsrichtung des ersten Sickenfußes aufeinanderfolgenden Vertiefungsabschnitten gebildet sein kann, welche vor allem in der Nachbarschaft von Schraubenlöchern der Dichtungsplatte angeordnet sind - dass sich auch mit einer solchen Ausführungsform die obige Aufgabe lösen lässt, ergibt sich aus der vorstehenden Beschreibung der Probleme, zu welchen bekannte Zylinderkopfdichtungen der eingangs erwähnten Art führen können.

Da der erste Sickenfuß (zumindest bereichsweise) in die Vertiefung eingreift, bewirkt Letztere (zumindest bereichsweise) eine Reduzierung der wirksamen Sickenhöhe und damit der Sickenkraft, und zwar vorzugsweise zumindest in der Nachbarschaft von Schraubenlöchern, wodurch sich eine flächige Pressung der Zylinderkopfdichtung zwischen Zylinderkopf und Motorblock in den schraubennahen Bereichen erreichen lässt und deshalb gegebenenfalls auf Hinterlandstopper verzichtet werden kann, wenn diese nur dem Zweck dienen sollen, übermäßige Verformungen der Fluid-Abdichtsicken im Zuge der Dichtungsmontage zu verhindern.

Für Motoren, deren Zylinderkopf durch Hinterlandstopper abgestützt werden muss, wird eine erfindungsgemäße Zylinderkopfdichtung so gestaltet, dass bei montierter Zylinderkopfdichtung die Elemente der Dichtungsplatte in den Bereichen der Brennraumstopper und der Zylinderkopf-Abstützelemente, das heißt der Hinterlandstopper, zwischen Zylinderkopf und Motorblock auf Block verspannt sind. Durch die Reduzierung der von der Halbsicke ausgeübten und sich vor allem auf den Zylinderkopf auswirkenden Kräfte insbesondere in der Nachbarschaft von Schraubenlöchern bzw. Zylinderkopfschrauben, aber auch durch den gegebenenfalls möglichen Verzicht auf einen oder mehrere Hinterlandstopper kommt es zu einer vorteilhaften Verlagerung der Schraubenkräfte auf die die Brennräume umgebenden Bereiche des Abdichtsystems; auch ist es bei durch die vorliegende Erfindung vorgeschlagenen Zylinderkopfdichtungen in vielen Fällen möglich, die Höhe der Brennraumstopper sowie unter Umständen auch der (noch nicht gepressten) Brennraum-Abdichtsicken im Vergleich zu bekannten Zylinderkopfdichtungen der eingangs erwähnten Art zu reduzieren, um eine gewünschte vorteilhafte Verteilung der durch die Zylinderkopfschrauben aufgebrachten Kräfte über die Zylinderkopfdichtung zu erreichen, insbesondere die Aufteilung der Schraubenkräfte auf die die Brennräume umgebenden Bereiche des Abdichtsystems einerseits und auf das sogenannte Hinterland der Zylinderkopfdichtung andererseits.

Da jede Zylinderkopfdichtung für einen ganz bestimmten Motor konstruiert wird, dessen Eigenschaften einschließlich der örtlich unterschiedlichen Steifigkeiten von Zylinderkopf und Motorblock sowie der örtlich unterschiedlichen Bauteiltemperaturen für alle Motor-Betriebszustände dem Dichtungskonstrukteur vom Motorhersteller bekanntgegeben werden, gehören auf dieser Basis angestellte Finite Elemente-Berechnungen zu den üblichen Hilfsmitteln eines Konstrukteurs von Zylinderkopfdichtungen, weshalb dieser die Tiefe der in der Trägerlage auszubildenden Vertiefung durch eine Finite Elemente-Berechnung ohne Weiteres so festlegen kann, dass an jeder Stelle der Halbsicke für jeden Betriebszustand eine für die Abdichtfunktion ausreichende Sickenpressung vorhanden ist, die Sickenkraft jedoch auf ein für das Abdichtvermögen der Sicke noch ausreichendes Minimum abgesenkt wird. In diesem Zusammenhang sei bemerkt, dass es für das Erreichen der vorgenannten Ziele empfehlenswert sein kann, die Vertiefung mit einem entsprechenden Tiefenprofil zu versehen, das heißt ihre Tiefe entlang der Halbsicke entsprechend zu variieren, was fertigungstechnisch ohne Weiteres möglich ist, vor allem dann, wenn es sich bei der Vertiefung um eine Einprägung in die Trägerlage handelt.

Hervorzuheben ist des Weiteren, dass eine erfindungsgemäße Zylinderkopfdichtung mit Vorteil so gestaltet werden kann, dass sich bei eingebauter Zylinderkopfdichtung deren Halbsicke im sogenannten Nebenschluss befindet (z.B. auch aufgrund von Brennraumstoppern mit entsprechender Höhe), und zwar auch bei einem Verzicht auf einen dem Schutz der Halbsicke dienenden Hinterlandstopper oder bei Verwendung von der Abstützung des Zylinderkopfs dienenden Hinterlandstoppern mit gegenüber dem Stand der Technik reduzierter Höhe, wobei in diesem Zusammenhang zu beachten ist, dass die Dauerhaltbarkeit einer sich im Nebenschluss befindenden Abdichtsicke im Allgemeinen deutlich größer ist als diejenige einer sich im sogenannten Hauptschluss befindenden Abdichtsicke.

Zur Definition von Hauptschluss und Nebenschluss sei vorsorglich Folgendes bemerkt:
Eine Sicke liegt immer dann im Nebenschluss, wenn ihr ein als Verformungsbegrenzer wirkender Stopper zugeordnet ist, das heißt ein Stopper mit einer für die Verformungsbegrenzung wirksamen Höhe von größer Null. Ein Stopper kann von einer Materialverdickung oder einer Nut für einen Eingriff einer Sickenkuppe oder eines Sickenfußes gebildet werden.

Ohne Wirkung eines Stoppers liegt eine Sicke im Hauptschluss.

Obwohl die Vertiefung grundsätzlich eine beliebige Querschnittsform haben kann, beispielsweise einen rechteckigen Querschnitt, sind aus fertigungstechnischen Gründen Ausführungsformen zu bevorzugen, bei denen die Vertiefung einen Querschnitt in Form einer ausgerundeten flachen Mulde aufweist, deren tiefste Stelle vorzugsweise in der Mitte zwischen den Muldenrändern liegt. Bei bevorzugten Ausführungsformen der erfindungsgemäßen Zylinderkopfdichtung liegt der erste Sickenfuß ungefähr über einem Längsmittelbereich der Vertiefung (in einer Draufsicht auf die gepresste Dichtungsplatte), das heißt in einem sich ungefähr in der Mitte zwischen den Vertiefungsrändern liegenden Längsbereich der Vertiefung.

Besonders vorteilhafte Ausführungsformen der erfindungsgemäßen Zylinderkopfdichtung zeichnen sich durch eines oder durch mehrere der folgenden Merkmale aus: Die (wegen eines eventuellen Tiefenprofils der Vertiefung) längs der Vertiefung gemittelte Tiefe des dem ersten Sickenfuß der Halbsicke gegenüberliegenden Vertiefungsbereichs ist ungefähr gleich 4 bis 30 %, vorzugsweise gleich 10 bis 25 % der Höhe der ungepressten Halbsicke, das heißt der Sickenhöhe bei noch nicht eingebauter Zylinderkopfdichtung; die Höhe der ungepressten Halbsicke beträgt 150 bis 250 µm, vorzugsweise 180 bis 220 µm, was allerdings nur auf eine Mehrzahl von Pkw-Motoren und nicht auf Großmotoren, insbesondere auf große Nutzfahrzeug-Motoren zutreffen wird; die längs der Vertiefung gemittelte Tiefe des dem ersten Sickenfuß der Halbsicke gegenüberliegenden Vertiefungsbereichs beträgt ungefähr 10 bis 60 µm, vorzugsweise 10 bis 35 µm; weist die Vertiefung ein Tiefenprofil auf, beträgt die Tiefe der Vertiefung in schraubennahen Bereichen vorzugsweise ca. 60 µm und in schraubenfernen Bereichen vorzugsweise weniger als 10 µm.

Bei den obigen Angaben über die Tiefe der Vertiefung im Vergleich zur Sickenhöhe betrifft der Bereich 4 bis 30 % eine Vertiefung ohne Tiefenprofil, der Bereich 10 bis 25 % eine Vertiefung mit Tiefenprofil.

Wenn vorstehend und im Folgenden von der Tiefe der Vertiefung die Rede ist, wird darunter an jeder Stelle insbesondere die maximale Tiefe der Vertiefung verstanden.

Bei aus Fertigungsgründen bevorzugten Ausführungsformen der durch die Erfindung vorgeschlagenen Zylinderkopfdichtung mit einer in die Trägerlage eingeprägten Vertiefung ist es von Vorteil, wenn die Trägerlage auf ihrer der mindestens einen, das heißt ersten Funktionslage zugewandten ersten Lagenseite auf beiden Seiten der Vertiefung jeweils eine sich längs der Vertiefung erstreckende Wulst aufweist, welche über die erste Lagenseite vorspringt, wobei das Materialvolumen der beiden Wülste insgesamt insbesondere ungefähr gleich dem Volumen der eingeprägten Vertiefung ist, das heißt das Materialvolumen der beiden Wülste ist insgesamt ungefähr gleich dem Volumen des beim Einprägen der Vertiefung in die Trägerlage aus Letzterer verdrängten Materials. Bei solchen Ausführungsformen ist die bei eingebauter Zylinderkopfdichtung wirksame Tiefe der Vertiefung gleich dem Abstand des Bodens der Vertiefung von den Kuppen der Wülste (im Schnitt durch die Trägerlage senkrecht zur Längsrichtung der Vertiefung). Wie sich aus dem Folgenden noch ergeben wird, kann die Zylinderkopfdichtung so gestaltet werden, dass die Wülste die Verformung, das heißt Abflachung der Halbsicke beim Einbau der Zylinderkopfdichtung und im Motorbetrieb in einem gewünschten Maß begrenzen, welches sich durch das für die Herstellung der Vertiefung verwendete Prägewerkzeug bestimmen lässt, durch welches der Wulstquerschnitt nach Form, Höhe und Breite festgelegt werden kann, auch wenn das Materialvolumen der Wulst durch den Querschnitt der zu prägenden Vertiefung vorgegeben wird.

Bei bevorzugten Ausführungsformen der erfindungsgemäßen Zylinderkopfdichtung ist die Trägerlage zwischen Funktionslagen angeordnet und weist dann auf ihren beiden Seiten Vertiefungen für erste Sickenfüße von in den Funktionslagen vorgesehenen Halbsicken auf. Dabei wird es im Allgemeinen wegen der miteinander kommunizierenden, im Zylinderkopf und im Motorblock vorgesehenen Öffnungen vorteilhaft sein, die Dichtungsplatte der Zylinderkopfdichtung mindestens in den Bereichen der Halbsicken zumindest im Wesentlichen spiegelsymmetrisch zu einer in der Trägerlage verlaufenden Mittelebene der Trägerlage auszubilden. Dabei wäre gegebenenfalls zu berücksichtigen, dass die Trägerlage außerhalb der Halbsickenbereiche beispielsweise durch Abkröpfen so gestaltet sein kann, dass die Dichtungsplatte nicht überall spiegelsymmetrisch zu der besagten Mittelebene ausgebildet werden kann. Bezüglich der spiegelsymmetrischen Ausbildung der Dichtungsplatte ist darauf hinzuweisen, dass dieses nicht auch bezüglich Sickenhöhen und Muldentiefen gelten muss.

Wie bereits erwähnt, kann bei einer erfindungsgemäßen Zylinderkopfdichtung eine in der Trägerlage ausgebildete Vertiefung eine sich in Vertiefungslängsrichtung ändernde Tiefe, das heißt ein Tiefenprofil aufweisen, oder sogar diskontinuierlich ausgebildet sein (zum Beispiel von in Vertiefungslängsrichtung in Abständen voneinander angeordneten Vertiefungsabschnitten gebildet werden). Für diesen Fall werden besonders vorteilhafte Ausführungsformen empfohlen, bei denen die Vertiefung entlang des ersten Sickenfußes eine sich derart ändernde Tiefe aufweist, dass Schraubenlöchern (der Dichtungsplatte) benachbarte Abschnitte der Vertiefung eine größere Tiefe besitzen als Vertiefungsabschnitte, welche zwischen einander benachbarten Schraubenlöchern befindlichen Dichtungsplattenbereichen benachbart sind, wobei Letzteres auch den Fall umfassen soll, dass in der Nachbarschaft von zwischen einander benachbarten Schraubenlöchern befindlichen Dichtungsplattenbereichen gar keine oder nur bereichsweise eine Vertiefung vorgesehen wird. Für solche bevorzugten Ausführungsformen gilt also, dass die Vertiefung in schraubennahen Bereichen eine vergleichsweise große Tiefe hat (wegen der dort sonst zu hohen Sickenkräfte), während in den schraubenfernen Bereichen (wegen der dort ohnehin reduzierten Sickenkräfte) die Vertiefung eine geringere Tiefe hat, soweit dort eine Vertiefung überhaupt vorgesehen wird. In Kenntnis der vorliegenden Erfindung kann mittels einer bekannten und bei der Konstruktion von Zylinderkopfdichtungen üblichen Finite Elemente-Berechnung die örtlich unterschiedliche optimale Tiefe der Vertiefung für alle Betriebszustände des Motors ohne Weiteres ermittelt werden.

Generell gilt für bevorzugte Ausführungsformen der erfindungsgemäßen Zylinderkopfdichtung, dass deren Dichtungsplatte derart gestaltet ist, dass bei montierter Zylinderkopfdichtung in den Schraubenlochbereichen die Trägerlage und die mindestens eine Funktionslage (zusammen mit dem Zylinderkopf und dem Motorblock) auf Block verspannt sind, das heißt dort gegeneinander anliegen.

Wie bereits erwähnt, ist Gegenstand der Erfindung auch ein Abdichtsystem, umfassend mindestens einen Zylinderkopf, einen Motorblock, Zylinderkopfschrauben und eine zwischen Zylinderkopf und Motorblock eingespannte Zylinderkopfdichtung mit einem oder mehreren der durch die vorliegende Erfindung vorgeschlagenen Merkmale.

Dabei werden Ausführungsformen eines solchen Abdichtsystems empfohlen, bei denen die Tiefe der mindestens einen Vertiefung so auf die Gestaltung und Federhärte der mindestens einen Halbsicke und die Steifigkeiten sowie die Temperaturausdehnungskoeffizienten von Zylinderkopf, Motorblock und Zylinderkopfschrauben abgestimmt ist (vorzugsweise aufgrund einer Finite Elemente-Berechnung), dass die Halbsicke im Zuge des Einspannens der Zylinderkopfdichtung im Sinne der Dauerhaltbarkeit der Halbsicke (keine Beeinträchtigung der Federkräfte und Vermeidung des Risikos einer Rissbildung) nicht übermäßig abgeflacht wird sowie nach der Dichtungsmontage und im Motorbettieb die Sickenfüße der Halbsicke in streifenförmigen Anlagebereichen überall mit einer für ihr Abdichtvermögen ausreichenden Kraft gegen die Trägerlage und den Zylinderkopf bzw. den Motorblock (gegebenenfalls gegen eine oder mehrere weitere Dichtungslagen zwischen der Funktionslage bzw. den Funktionslagen und dem Zylinderkopf und/oder dem Motorblock) angepresst sind.

Weitere Merkmale, Vorteile und Einzelheiten der Erfindung ergeben sich aus der beigefügten zeichnerischen Darstellung bevorzugter Ausführungsformen der Erfindung und/oder aus der nachfolgenden Beschreibung dieser Zeichnungen; in diesen zeigen:
- Fig. 1:: eine Draufsicht auf eine Ausführungsform einer erfindungsgemäßen Zylinderkopfdichtung, welche jedoch nur beispielhaft vier Brennraumöffnungen aufweist, das heißt für einen Vierzylindermotor oder eine Zylinderbank eines V-8-Motors bestimmt ist;
- Fig. 2:: eine vergrößerte Darstellung des Ausschnitts "A" aus Fig. 1;
- Fig. 3:: einen Schnitt durch einen Bereich dieser Zylinderkopfdichtung, und zwar einen Schnitt gemäß der Linie 3-3 aus Fig. 2, wobei dieser Schnitt die Zylinderkopfdichtung im nicht-gepressten Zustand zeigt und gegebenenfalls vorhandene Brennraumstopper nicht darstellt;
- Fig. 4:: einen Schnitt durch einen anderen Bereich dieser Zylinderkopfdichtung, und zwar einen Schnitt gemäß der Linie 4-4 in Fig. 2, in welchem auch der Zylinderkopfdichtung benachbarte Bereiche des Zylinderkopfs und des Motorblocks angedeutet wurden und das Abdichtsystem im noch nicht verpressten Zustand darstellt wurde (außerdem wurden Änderungen der Materialdicke der Trägerlage gegenüber der Realität stark vergrößert);
- Fig. 5:: den Ausschnitt "B" aus Fig. 4 in vergrößerter Darstellung vor und nach dem Einprägen von Vertiefungen in die Trägerlage;
- Fig. 6A:: eine ähnliche Darstellung wie diejenige der Fig. 4, wobei jedoch größere Bereiche der Zylinderkopfdichtung sowie der benachbarten Motorbauteile (Zylinderkopf und Motorblock) gezeichnet wurden, außerdem zeigt die Fig. 6A eine Zylinderkopfschraube und Brennraumstopper;
- Fig. 6B:: einen etwas schematisierten Ausschnitt aus Fig. 6A nach dem Anziehen der Zylinderkopfschrauben.

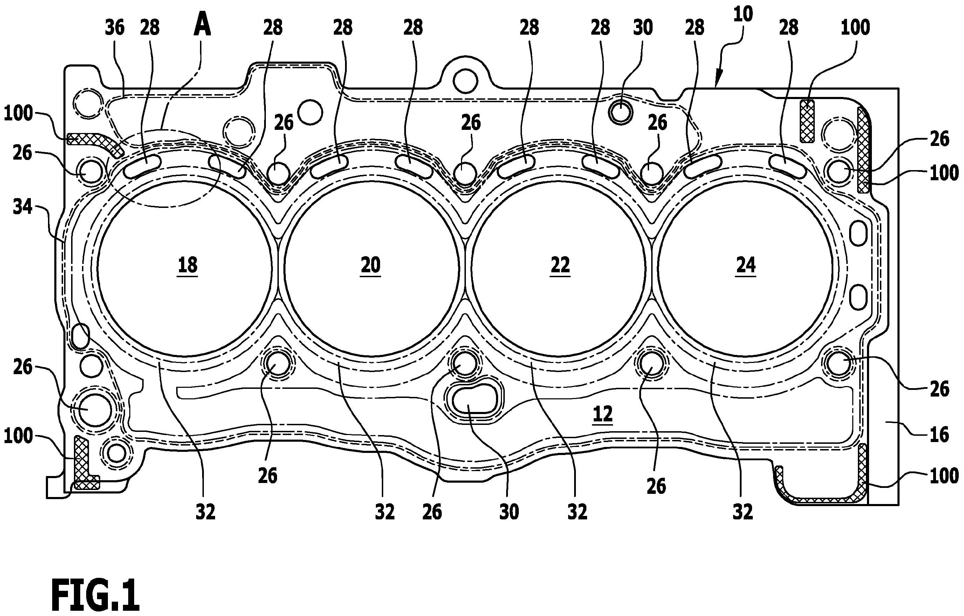

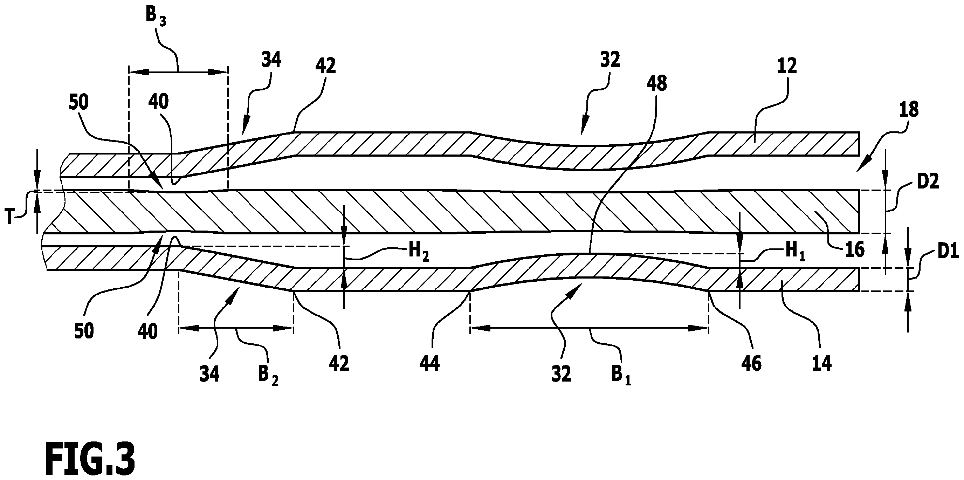

Die Fig. 1 zeigt eine von einigen Details befreite Draufsicht auf eine mehrlagige, zumindest im Wesentlichen metallische Zylinderkopfdichtung, deren in Fig. 1 mit 10 bezeichnete Dichtungsplatte ausweislich der Fig. 3 drei Dichtungslagen aufweist, nämlich eine obere und eine untere Funktionslage 12 bzw. 14 und eine zwischen diesen angeordnete Trägerlage 16. Die Fig. 1 zeigt also vor allem eine Draufsicht auf die obere Funktionslage 12, lässt aber einige noch zu beschreibende Details der Trägerlage 16 erkennen, welche die vorzugsweise deckungsgleich gestalteten Funktionslagen 12 und 14 bereichsweise überragt.

In der Dichtungsplatte 10 sind vier Brennraumöffnungen 18, 20, 22 und 24 ausgebildet, außerdem aber auch weitere Durchgangsöffnungen wie Schraubenlöcher 26 für den Durchtritt von Zylinderkopfschrauben, Wasserlöcher 28 für den Durchtritt von Kühlwasser sowie nur zum Teil dargestellte Öl-Durchtrittsöffnungen 30 - in Fig. 1 sind darüber hinaus aber noch weitere Durchtrittsöffnungen der Dichtungsplatte 10 dargestellt, welche für die vorliegende Erfindung bedeutungslos sind und deshalb hier nicht beschrieben zu werden brauchen. Zumindest die meisten dieser Durchtrittsöffnungen der Dichtungsplatte 10 werden von in den Dichtungslagen 12, 14 und 16 erzeugten, deckungsgleich übereinander angeordneten Öffnungen gebildet.

Für jede der Brennraumöffnungen 18 bis 24 ist in jeder der Funktionslagen 12, 14 eine als Vollsicke gestaltete Brennraum-Abdichtsicke 32 ausgebildet (siehe auch Fig. 3), wobei in jeder der Funktionslagen 12, 14 die Brennraum-Abdichtsicken 32 in den Stegbereichen zwischen einander benachbarten Brennraumöffnungen ineinander übergehen, so dass die Brennraum-Abdichtsicken die Brennraumöffnungen brillenartig umgeben.

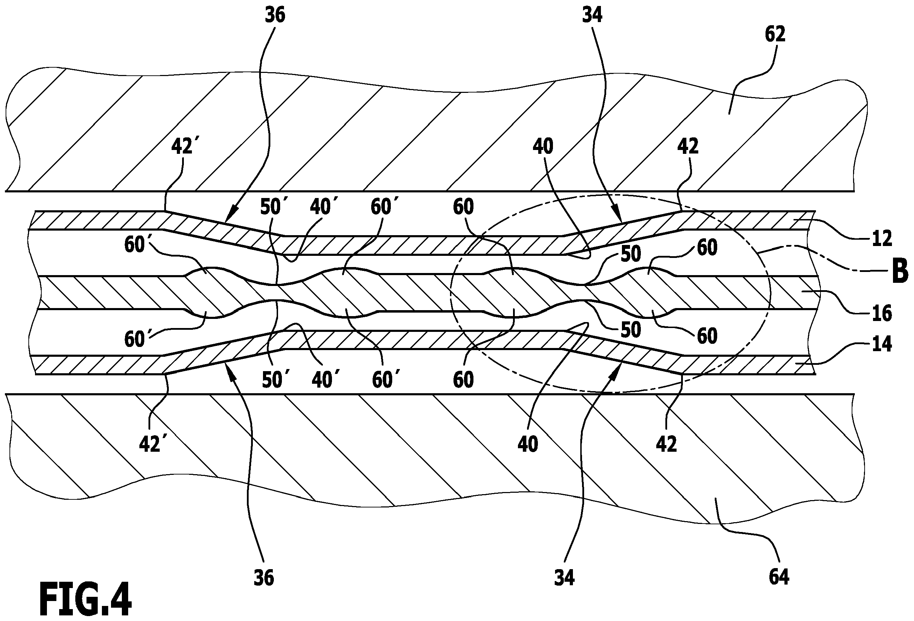

Der im Motor aufgrund der Wasserlöcher 28 mit Kühlwasser geflutete Bereich der Zylinderkopfdichtung, welcher zwischen den Brennraum-Abdichtsicken 32 und einer die Gesamtheit aller Brennraumöffnungen und Wasserlöcher umschließenden sogenannten Wassersicke in jeder der Funktionslagen 12, 14 liegt, wird einerseits durch die Brennraum-Abdichtsicken 32 und andererseits durch insbesondere deckungsgleich übereinanderliegende Halbsicken 34 in den beiden Funktionslagen 12 und 24 abgedichtet, wobei die auch in den Figuren 3 und 4 erkennbaren Halbsicken 34 die vorstehend erwähnten Wassersicken bilden.

Derjenige Bereich bzw. diejenigen Bereiche der Dichtungsplatte 10, welcher bzw. welche eine oder mehrere Öl-Durchtrittsöffnungen 30 enthält bzw. enthalten, wird durch in den Funktionslagen 12, 14 ausgebildete sogenannte Ölsicken umschlossen und im Motor abgedichtet, wobei im Folgenden nur auf einen dieser Bereiche eingegangen werden wird, welcher in Fig. 1 oben liegt und von in den Funktionslagen 12, 14 ausgebildeten, deckungsgleich übereinanderliegenden und als Halbsicken 36 gestalteten Ölsicken umschlossen und im Motor abgedichtet wird - die Halbsicken 36 sind auch in Fig. 4 dargestellt.

Wie die Fig. 1 deutlich erkennen lässt, verlaufen in der unmittelbaren Nachbarschaft einiger Schraubenlöcher 26, nämlich in der gemäß Fig. 1 oberen Reihe von Schraubenlöchern 26 neben dem zweiten, dritten und vierten Schraubenloch 26, die Halbsicken 34 und 36 unmittelbar nebeneinander (in einer Draufsicht auf die Dichtungsplatte 10), so dass bei eingebauter Zylinderkopfdichtung in unmittelbarer Nähe dieser drei Schraubenlöcher 26 die Federkräfte (Rückstellkräfte) mehrerer Fluid-Abdichtsicken, nämlich der Halbsicken 34 und 36, den durch die Zylinderkopfschrauben aufgebrachten Einspann- und Pressungskräften entgegenwirken und so zu den vorstehend geschilderten Problemen führen.

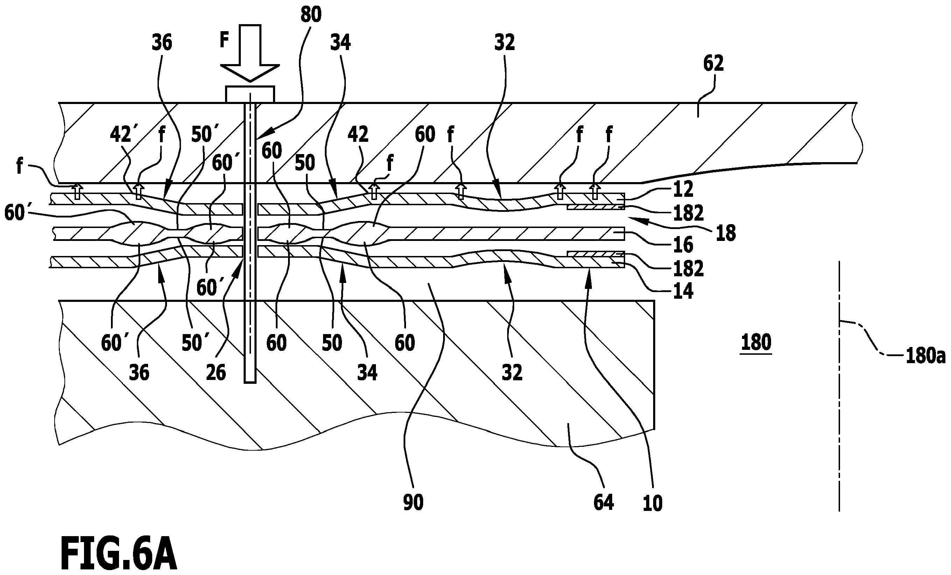

Was in Fig. 3 der Einfachheit halber weggelassen wurde, ist irgendeine der bekannten Verformungsbegrenzungseinrichtungen für die Brennraum-Abdichtsicken 32; eine solche Verformungsbegrenzungseinrichtung zeigt jedoch die noch zu beschreibende Fig. 6A.

Wie bereits erwähnt, zeigt die Fig. 3 die Dichtungsplatte der Zylinderkopfdichtung im ungepressten Zustand, das heißt vor dem Einbau der Zylinderkopfdichtung, und zur besseren Darstellung wurden die Dichtungslagen 12, 14 und 16 mit gemäß Fig. 3 vertikalen Abständen voneinander gezeichnet, obwohl sie im Auslieferungszustand der Zylinderkopfdichtung gegeneinander anliegen, da bei einer mehrlagigen Dichtungsplatte deren Dichtungslagen miteinander verbunden sind, beispielsweise durch Vernieten oder Punktschweißen.

In den meisten Anwendungsfällen einer erfindungsgemäßen Zylinderkopfdichtung wird die Trägerlage eine größere Blechdicke aufweisen als die Funktionslage bzw. die Funktionslagen, das heißt die in Fig. 3 angegebene Materialdicke D1 der Funktionslage 14 wird kleiner sein als die in Fig. 3 angegebene Materialdicke D2 der Trägerlage 16, und bei der in Fig. 3 dargestellten Ausführungsform weisen beide Funktionslagen 12, 14 dieselbe Materialdicke D1 auf. Ferner besteht bei bevorzugten Ausführungsformen der erfindungsgemäßen Zylinderkopfdichtung die mindestens eine Funktionslage, das heißt bei der Ausführungsform gemäß Fig. 3 sowohl die Funktionslage 12 als auch die Funktionslage 14, aus einem Federstahlblech, welches auch bei den Betriebstemperaturen der Zylinderkopfdichtung federelastische Eigenschaften aufweist, während die Trägerlage 16 vorzugsweise aus einem Stahlblech hergestellt wird, welches duktiler und damit leichter umformbar ist als ein Federstahlblech.

Wie die Fig. 3 erkennen lässt, springt die Halbsicke 34 der mindestens einen Funktionslage einer erfindungsgemäßen Zylinderkopfdichtung in Richtung auf die Trägerlage 16 vor, und Gleiches gilt bei bevorzugten Ausführungsformen auch für die als Vollsicke gestaltete Brennraum-Abdichtsicke 32 - dabei bezieht sich das Vorspringen auf das Niveau der Funktionslage zwischen den beiden Sicken 32 und 34. An dieser Stelle sei im Hinblick auf die Figuren 1, 2 und 4 darauf hingewiesen, dass das Vorstehende auch für die Halbsicke 36 gilt.

Die Halbsicke 34 (Entsprechendes soll auch für die Halbsicke 36 gelten) der mindestens einen Funktionslage 12 bzw. 14 hat einen der Trägerlage 16 zugekehrten ersten Sickenfuß 40 und einen von Letzterem abgewandten und bei eingebauter Zylinderkopfdichtung dem benachbarten Motorbauteil (Zylinderkopf oder Motorblock) zugekehrten zweiten Sickenfuß 42, während bei bevorzugten Ausführungsformen der erfindungsgemäßen Zylinderkopfdichtung Sickenfüße 44 und 46 der als Vollsicke gestalteten Brennraum-Abdichtsicke 32 bei eingebauter Zylinderkopfdichtung dem benachbarten Motorbauteil zugekehrt sind und eine Sickenkuppe 48 der Brennraum-Abdichtsicke 32 der Trägerlage 16 zugewandt ist. In Fig. 3 wurde die zwischen den Sickenfüßen 44 und 46 zu messende Breite der Brennraum-Abdichtsicke 32 mit B₁ bezeichnet, die Höhe der Brennraum-Abdichtsicke 32 mit H₁, die zwischen den Sickenfüßen 40 und 42 zu messende Breite der Halbsicke 34 mit B₂ und die Höhe dieser Halbsicke mit H₂. Meist beträgt B₁ größenordnungsmäßig einige Millimeter, zum Beispiel 2 bis 3 mm, H₁ ca. 0,1 bis ca. 0,2 mm, beispielsweise ca. 0,15 mm, B₂ ca. 1,0 bis ca. 1,5 mm, beispielsweise 1,2 mm, und H₂ ca. 0,15 bis ca. 0,25 mm, beispielsweise ca. 0,2 mm.

Für ein zumindest bereichsweises Eintauchen des ersten Sickenfußes 40 der Halbsicke 34 der mindestens einen Funktionslage 12 bzw. 14 in die Trägerlage 16 (bei eingebauter, das heißt gepresster Zylinderkopfdichtung) weist die Trägerlage 16 auf ihrer der betreffenden Halbsicke 34 zugekehrten Seite eine flache, rillen- oder nutartige Vertiefung 50 auf, deren Breite in Fig. 3 mit B₃ und deren Tiefe mit T bezeichnet wurde. An jeder Stelle der in einer Draufsicht auf die Zylinderkopfdichtung länglichen Vertiefung 50 ist deren Tiefe T gleich dem Niveauunterschied zwischen der dort tiefsten Stelle der Vertiefung 50 und der Oberfläche der Trägerlage 16 zu beiden Seiten der Vertiefung 50 (im Querschnitt durch die Trägerlage). Wie bereits erwähnt, kann entlang der Vertiefung 50 die Tiefe T variieren und ändert sich bei bevorzugten Ausführungsformen so, dass die Vertiefung 50 in der Nähe eines Schraubenlochs 26 am größten ist und mit zunehmender Entfernung vom Schraubenloch insbesondere stetig abnimmt, und zwar gegebenenfalls bis auf Null. Dabei dient die Vertiefung 50 der Reduzierung der wirksamen Sickenhöhe und damit der von der Halbsicke 34 bei der Montage der Zylinderkopfdichtung und im Motorbetrieb ausgeübten Sickenkraft.

Bei noch nicht gepresster Zylinderkopfdichtung kann der erste Sickenfuß 40 der Halbsicke 34 über der tiefsten Stelle und insbesondere über der Längsmitte der Vertiefung 50 liegen (in einer Draufsicht auf die Zylinderkopfdichtung), und zwar an jeder Stelle der Halbsicke 34 bzw. der Vertiefung 50, es ist jedoch zu bevorzugen, die Zylinderkopfdichtung so zu gestalten, dass der erste Sickenfuß 40 bei noch nicht gepresster Zylinderkopfdichtung neben dieser tiefsten Stelle liegt und erst im Zuge der Dichtungsmontage an die tiefste Stelle verschoben wird - beim Abflachen der Halbsicke 34 im Zuge der Dichtungsmontage werden die beiden Sickenfüße 40 und 42 parallel zur Trägerlage 16 und quer zur Längserstreckung der Halbsicke 34 relativ zueinander verschoben, was gegebenenfalls (je nach Gestaltung der Zylinderkopfdichtung) auch zur Folge haben kann, dass der erste Sickenfuß 40 im Zuge der Dichtungsmontage neben die tiefste Stelle der Vertiefung 50 verschoben wird. Da es hinsichtlich der angestrebten flächigen Verpressung des Abdichtsystems in den Bereichen der Zylinderkopfschrauben vor allem auf eine Reduzierung der Sickenkräfte in den schraubennahen Bereichen der Dichtungsplatte ankommt, sind also Ausführungsformen zu bevorzugen, bei denen der erste Sickenfuß 40 nach dem Anziehen der Zylinderkopfschrauben zumindest in den schraubennahen Bereichen der Dichtungsplatte an der jeweils tiefsten Stelle der Vertiefung 50 gegen die Trägerlage 16 anliegt.

Liegt die Höhe H₂ der Halbsicke 34 in dem vorgenannten Bereich, empfiehlt sich für das Maß T der Vertiefung 50 ein Bereich von ca. 10 bis ca. 50 µm, vorzugsweise ein Wert von ca. 10 bis 20 µm - dies gilt für eine Vertiefung 50 mit überall gleicher maximaler Tiefe, während bei Ausführungsformen, bei welchen die Tiefe der Vertiefung 50 längs der Letzteren variiert, die vorstehend aufgeführten Werte nur für die schraubennahen Bereiche der Vertiefung 50 gelten sollen.

Was vorstehend für die Halbsicke 34 und die Vertiefung 50 ausgeführt wurde, gilt bevorzugt auch für die Halbsicke 36 und eine dieser erfindungsgemäß zugeordnete, der Vertiefung 50 entsprechende Vertiefung der Trägerlage 16.

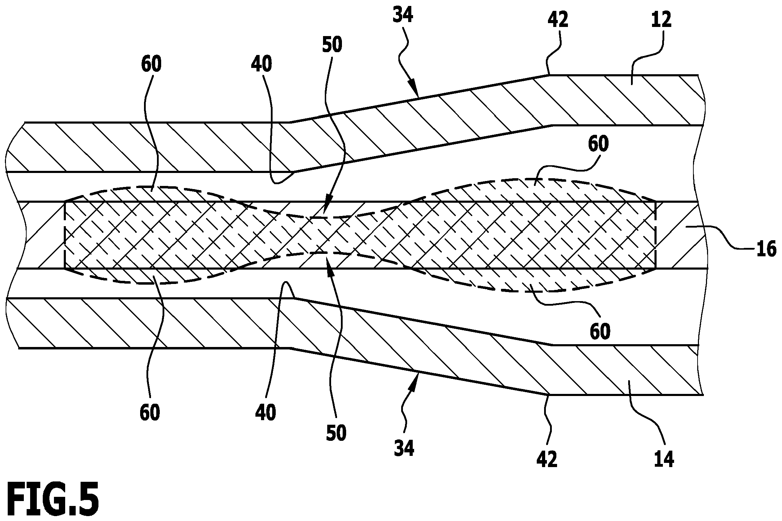

Vor einer Erörterung der Fig. 4 soll nun zunächst Dasjenige beschrieben werden, was sich der Fig. 5 entnehmen lässt, in welcher so weit möglich dieselben Bezugszeichen wie in Fig. 3 verwendet wurden:
Wie bereits erwähnt, werden die Vertiefungen 50 vorzugsweise in die Trägerlage 16 eingeprägt, welche in Fig. 5 mit ausgezogenen Linien im noch unverformten Zustand, das heißt vor dem Einprägen der Vertiefungen 50 dargestellt ist. Beim Einprägen einer jeden dieser Vertiefungen 50 wird Material der Trägerlage 16 nach beiden Seiten (gemäß der in Fig. 5 gezeigten Querschnittsdarstellung) verdrängt und bildet so bei einer entsprechenden Gestaltung des Prägewerkzeugs zu beiden Seiten der jeweiligen Vertiefung 50 jeweils eine sich in Vertiefungslängsrichtung erstreckende Wulst 60, wobei an jeder Stelle der Vertiefung 50 die Summe der Materialvolumina der beiden Wülste 60 zumindest ungefähr gleich dem Hohlraumvolumen der Vertiefung 50 an dieser Stelle ist. Die Fig. 5 zeigt mit gestrichelten Linien die Querschnittsform der Trägerlage 16 nach dem Einprägen der Vertiefungen 50 und der Bildung der Wülste 60.

Die Fig. 4 zeigt Teile eines Zylinderkopfs 62 und eines Motorblocks 64 sowie der Funktionslagen 12, 14 und der Trägerlage 16, wobei rechts die Halbsicken 34 und die diesen zugeordneten Vertiefungen 50 und Wülste 60 dargestellt sind. Links zeigt die Fig. 4 die in den beiden Funktionslagen 12 und 14 ausgebildeten Halbsicken 36 sowie diesen zugeordnete Vertiefungen 50' und Wülste 60' der Trägerlage 16, für welche dasselbe gilt wie für die Vertiefungen 50 und die Wülste 60. In Fig. 4 wurden die ersten Sickenfüße der Halbsicken 36 mit 40' bezeichnet, die zweiten Sickenfüße mit 42'.

Da die Figuren 4 und 5 die Zylinderkopfdichtung im noch nicht-gepressten Zustand darstellen, lässt sich den Figuren 4 und 5 auch entnehmen, dass in diesem Zustand die ersten Sickenfüße 40 bzw. 40' gegenüber den tiefsten Stellen der Vertiefungen 50 bzw. 50' seitlich noch etwas versetzt sind (in einer Draufsicht auf die Zylinderkopfdichtung). Außerdem sei darauf hingewiesen, dass in den Figuren 4 und 5 die Tiefe der Vertiefungen 50 und 50' sowie die Höhe bzw. Dicke der Wülste 60 und 60' größer dargestellt wurden als dies in der Realität der Fall ist.

Die Fig. 6A zeigt im Wesentlichen dasselbe wie die Fig. 4, zusätzlich jedoch einen Teil eines zur Brennraumöffnung 18 der Zylinderkopfdichtung gehörenden Brennraums 180, dessen Achse 180a strichpunktiert angedeutet wurde, sowie eine Zylinderkopfschraube 80, welche ein Schraubenloch 26 der Dichtungsplatte 10 durchsetzt, und eine den Brennraum-Abdichtsicken 32 zugeordnete bekannte Verformungsbegrenzungseinrichtung, gebildet von die Brennraumöffnung kreisringförmig umschließenden Brennraumstoppern 182 in Form von flachen Blechringen, welche beispielsweise durch Punktschweißen an den Funktionslagen 12 und 14 befestigt wurden und eine solche Dicke aufweisen, dass sie bei der Montage der Zylinderkopfdichtung und im Motorbetrieb zwar eine gewisse elastische und damit reversible Abflachung der Brennraum-Abdichtsicken 32 zulassen, deren übermäßige Verformung jedoch verhindern. Die Fig. 6A zeigt den Zylinderkopf 62, den Motorblock 64 und die Dichtungsplatte 10 vor dem Anziehen der Zylinderkopfschrauben, das heißt vor dem Einspannen der Zylinderkopfdichtung zwischen Zylinderkopf und Motorblock; in diesem Zustand ist die der Dichtungsplatte 10 benachbarte Unterseite des Zylinderkopfs 22, das heißt dessen Dichtfläche noch absolut eben.

Beim Anziehen der in Gewindebohrungen des Motorblocks 64 eingreifenden Zylinderkopfschrauben und damit auch der Zylinderkopfschraube 80 ziehen diese den Zylinderkopf 62 gemäß Fig. 6A nach unten und üben auf die Motorbauteile sowie die Zylinderkopfdichtung in Richtung des in Fig. 6A dargestellten Pfeils F wirkende Kräfte aus, welche bewirken, dass um die Brennraumöffnung 18 herum die Funktionslagen 12, 14 samt den Brennraumstoppern 182 und die Trägerlage 16 zwischen dem Zylinderkopf 62 und dem Motorblock 64 auf Block verspannt werden, das heißt dass um die Brennraumöffnung 18 herum alle dieser benachbarten Elemente der Zylinderkopfdichtung gegeneinander sowie gegen den Zylinderkopf 62 und den Motorblock 64 anliegen. Allerdings werden die Funktionslagen 12 und 14 im Zuge des Anziehens der Zylinderkopfschrauben zunächst nur mit einigen Bereichen gegen den Zylinderkopf 62 und den Motorblock 64 angelegt, und diese Bereiche wurden in Fig. 6A für die Funktionslage 12 durch Pfeile f gekennzeichnet. Da die bezüglich des Brennraums 180 radial außerhalb der Brennraumstopper 182 liegenden Bereiche der Funktionslagen 12, 14 flexibel sind und vor allem der Zylinderkopf 62 kein absolut starres Bauteil darstellt, die von den Zylinderkopfschrauben erzeugten Schraubenkräfte jedoch nur lokal und radial außerhalb der Brennraumstopper 182 in das Abdichtsystem eingeleitet werden, wird nach dem vorschriftsmäßigen Anziehen der Zylinderkopfschrauben die Weite (gemäß Fig. 6A vertikal gemessen) des zwischen dem Zylinderkopf 62 und dem Motorblock 64 bestehenden und durch die Zylinderkopfdichtung abzudichtenden Dichtspalts 90 im Bereich der Brennraumstopper 182 durch die Summe der Materialdicken der Funktionslagen 12, 14, der Brennraumstopper 182 und der Trägerlage 16 bestimmt, der nicht absolut starre Zylinderkopf 62 wird jedoch radial außerhalb (bezüglich des Brennraums 180) der Brennraumstopper 182 durch die Zylinderkopfschrauben bereichsweise unterschiedlich weit nach unten gezogen und dabei bereichsweise unterschiedlich verformt (Zylinderkopfverzüge); dieser Verformung wirken jedoch die Rückfederungskräfte der federelastischen Fluid-Abdichtsicken, das heißt der Halbsicken 34 und 36 entgegen. Vor allem dann, wenn die Zylinderkopfdichtung keine Hinterlandstopper oder nur Hinterlandstopper mit einer geringen wirksamen Höhe aufweist, führt die dargestellte bevorzugte Ausführungsform der erfindungsgemäßen Zylinderkopfdichtung mit ihren Vertiefungen 50 und 50' zumindest in ihren den Schraubenlöchern 26 unmittelbar benachbarten Bereichen zu einer solchen Reduzierung der wirksamen Rückfederungskräfte der Fluid-Abdichtsicken, das heißt der Halbsicken 34 und 36, dass sich die Dichtungsplatte 10 auch um diejenigen Schraubenlöcher 26 herum, in deren unmittelbarer Nachbarschaft eine oder mehrere Fluid-Abdichtsicken verlaufen, zumindest nahezu vollständig flächig zwischen dem Zylinderkopf 62 und dem Motorblock 64 verpressen lässt und dort zumindest weitgehend keine Spalte zwischen der Dichtungsplatte 10 und dem Zylinderkopf 62 sowie dem Motorblock 64 vorhanden sind.

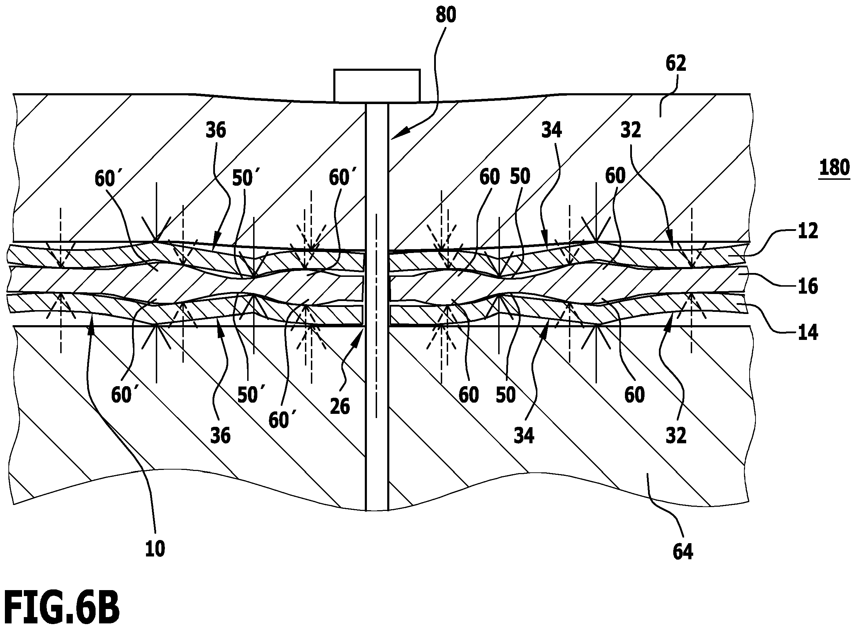

Die Fig. 6B zeigt im Wesentlichen dieselben Teile des Abdichtsystems wie die Fig. 6A, jedoch wurde der die Brennraumstopper 182 enthaltende und an den Brennraum 180 unmittelbar angrenzende Bereich der Dichtungsplatte 10 weggelassen; deshalb wurden in Fig. 6B dieselben Bezugszeichen wie in Fig. 6A verwendet. Die Fig. 6B gibt jedoch qualitativ den Zustand des Abdichtsystems nach dem vorschriftsmäßigen Anziehen aller Zylinderkopfschrauben wieder.

In Fig. 6B wurden diejenigen Stellen, an denen die Sickenfüße der Halbsicken 34 und 36 gegen die Motorbauteile Zylinderkopf 62 und Motorblock 64 bzw. gegen die Trägerlage 16 anliegen, durch mit durchgehenden Linien gezeichnete Pfeile gekennzeichnet, während diejenigen Stellen, an denen die Funktionslagen 12, 14 außerhalb ihrer Sickenfüße gegen den Zylinderkopf 62 und den Motorblock 64 bzw. gegen die Trägerlage 16 anliegen, durch mit gestrichelten Linien gezeichnete Pfeile gekennzeichnet wurden.

Aus der Fig. 6A und deren vorstehender Beschreibung lässt sich ableiten, dass in der in den Motor eingebauten Zylinderkopfdichtung die Brennraum-Abdichtsicken 32 im sogenannten Nebenschluss liegen, da ihre Pressungsbeanspruchung durch die Brennraumstopper 182 begrenzt wird.

Analog lässt sich aus Fig. 6B ableiten, dass dies bei bevorzugten Ausführungsformen der erfindungsgemäßen Zylinderkopfdichtung auch für die Fluid-Abdichtsicken, das heißt die Halbsicken 34 und 36 gilt, und zwar wegen den die Funktionslage 12 bzw. die Funktionslage 14 in der Nachbarschaft ihrer in die Vertiefungen 50 und 50' eingreifenden Sickenfüße abstützenden Wülsten 60 und 60', welche eine gewisse Verformungsbegrenzungs- oder Stopperfunktion für diese Halbsicken haben, das heißt einer übermäßigen Abflachung dieser Halbsicken entgegenwirken. Es ist also ein besonderes Merkmal bevorzugter Ausführungsformen der erfindungsgemäßen Zylinderkopfdichtung, dass die mindestens eine Fluid-Abdichtsicke bei eingebauter Zylinderkopfdichtung im Nebenschluss liegt.

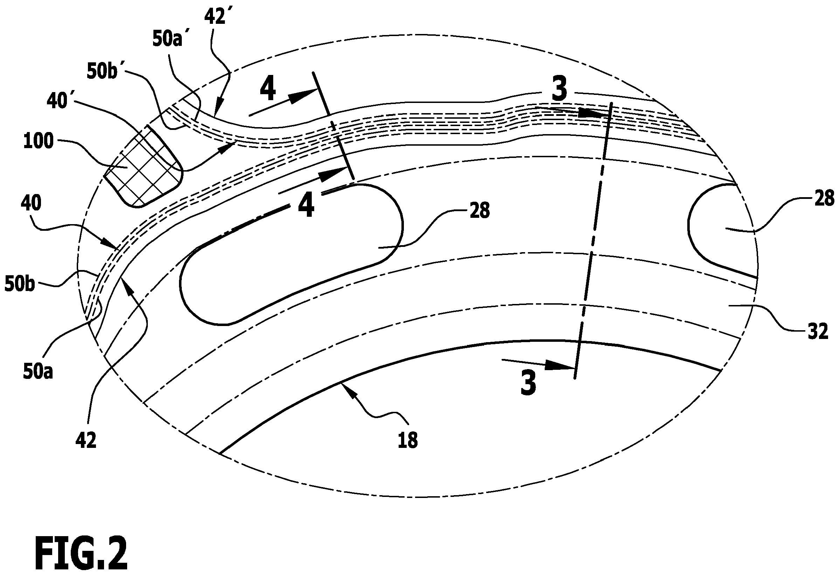

Zwar lässt auch die in Fig. 1 wiedergegebene Draufsicht auf die Dichtungsplatte 10 die Sickenfüße 40 und 42 sowie 40' und 42' der Halbsicken 34 und 36 ebenso erkennen wie die Konturen der Vertiefungen 50 und 50', jedoch ist diesbezüglich die Fig. 2 deutlicher, so dass die entsprechenden Bezugszeichen nur in die Fig. 2 eingetragen wurden.

Die Fig. 2 zeigt mit einer durchgezogenen Linie den Verlauf des Sickenfußes 42 und mit gestrichelten Linien den Verlauf der seitlichen Ränder 50a und 50b der zum Sickenfuß 42 gehörenden Vertiefung 50, außerdem mit einer durchgehenden Linie den Verlauf des Sickenfußes 42' sowie mit gestrichelten Linien den Verlauf der seitlichen Ränder 50a' und 50b' der dem Sickenfuß 42' zugeordneten Vertiefung 50', und schließlich mit strichpunktierten Linien die Verläufe der Sickenfüße 40 und 40'.

Abschließend sei noch darauf hingewiesen, dass in Fig. 1 mehrere sogenannte Hinterlandstopper 100 angedeutet wurden, welche eine erfindungsgemäße Zylinderkopfdichtung optional aufweisen kann und die an einer oder mehreren Dichtungslagen der Dichtungsplatte 10 vorgesehen werden können.

## Patentansprüche

1. Zylinderkopfdichtung mit einer länglichen, mehrlagigen metallischen Dichtungsplatte (10), welche mehrere Brennraumöffnungen (18, 20, 22, 24), Fluid-Durchgangsöffnungen (28, 30) sowie Schraubenlöcher (26) für den Durchtritt von Zylinderkopfschrauben (80) und mindestens eine erste Funktionslage (12, 14) sowie eine Trägerlage (16) aufweist, wobei die Funktionslage mit die Brennraumöffnungen umschließenden Brennraum-Abdichtsicken (32) sowie auf der von den Brennraumöffnungen abgewandten Seite der Brennraum-Abdichtsicken im Abstand von den Letzteren mit mindestens einer als Halbsicke (34) gestalteten Fluid-Abdichtsicke versehen ist, welche einen gegen die Trägerlage anzupressenden ersten Sickenfuß (40) sowie einen von Letzterem um die Sickenbreite (B₂) beabstandeten zweiten Sickenfuß (42) besitzt, **dadurch gekennzeichnet, dass** die Trägerlage (16) auf ihrer der ersten Funktionslage (12) zugewandten ersten Lagenseite mindestens in einigen, Schraubenlöchern (26) benachbarten Bereichen der Dichtungsplatte (10) wenigstens eine sich längs des ersten Sickenfußes erstreckende langgestreckte und flache Vertiefung (50) mit einer solchen Breite (B₃) aufweist, dass über der Vertiefung (50) nur ein streifenförmiger Bereich der ersten Funktionslage (12) liegt, welcher von der Halbsicke (34) nur deren ersten Sickenfuß (40) sowie höchstens die halbe Sickenbreite (B₂), jedoch nicht den zweiten Sickenfuß (42) enthält.

2. Zylinderkopfdichtung nach Anspruch 1, wobei sich die Vertiefung (50) über die gesamte Länge des ersten Sickenfußes (40) erstreckt.

3. Zylinderkopfdichtung nach Anspruch 1 oder 2, wobei in einer Draufsicht auf die Dichtungsplatte (10) der erste Sickenfuß (40) über einem Längsmittelbereich der Vertiefung (50) liegt.

4. Zylinderkopfdichtung nach einem der Ansprüche 1 bis 3, wobei die längs der Vertiefung (50) gemittelte Tiefe des dem ersten Sickenfuß (40) gegenüberliegenden Vertiefungsbereichs ungefähr gleich 4 bis 30 %, vorzugsweise gleich 10 bis 25 % der Höhe der ungepressten Halbsicke (34) ist.

5. Zylinderkopfdichtung nach einem der Ansprüche 1 bis 4, wobei die Höhe der ungepressten Halbsicke (34) 150 bis 250 µm, vorzugsweise 180 bis 220 µm beträgt.

6. Zylinderkopfdichtung nach einem der Ansprüche 1 bis 5, wobei die längs der Vertiefung (50) gemittelte Tiefe des dem ersten Sickenfuß (40) gegenüberliegenden Vertiefungsbereichs ungefähr 10 bis 60 µm, vorzugsweise 10 bis 35 µm beträgt.

7. Zylinderkopfdichtung nach einem der Ansprüche 1 bis 6, wobei die Vertiefung (50) eine Einprägung in die Trägerlage (16) ist.

8. Zylinderkopfdichtung nach Anspruch 7, wobei die Trägerlage (16) auf ihrer der ersten Funktionslage (12) zugewandten ersten Lagenseite auf beiden Seiten der Vertiefung (50') jeweils eine sich längs der Vertiefung erstreckende Wulst (60') aufweist, welche über die ersten Lagenseite vorspringt.

9. Zylinderkopfdichtung nach einem der Ansprüche 1 bis 8, wobei die Trägerlage (16) zumindest in einem der Halbsicke (34) gegenüberliegenden ersten Bereich einlagig ist.

10. Zylinderkopfdichtung nach einem der Ansprüche 1 bis 9, wobei die Trägerlage (16) zumindest in einem der Halbsicke (34) gegenüberliegenden ersten Bereich eine größere mittlere Materialdicke aufweist als der streifenförmige Bereich der Funktionslage.

11. Zylinderkopfdichtung nach einem der Ansprüche 1 bis 10, wobei die Halbsicke (34) der Trägerlage (16) unmittelbar benachbart ist.

12. Zylinderkopfdichtung nach einem der Ansprüche 1 bis 11, wobei die Dichtungsplatte (10) eine zweite Funktionslage (14) aufweist, die Trägerlage (16) zwischen der ersten und zweiten Funktionslage (12 bzw. 14) angeordnet und die Dichtungsplatte (10) mindestens im Bereich der Halbsicke(34) zumindest im Wesentlichen spiegelsymmetrisch zu einer in der Trägerlage verlaufenden Mittelebene ausgebildet ist.

13. Zylinderkopfdichtung nach einem der Ansprüche 1 bis 12, wobei die Vertiefung (50) entlang des ersten Sickenfußes (40) eine sich derart ändernde Tiefe (T) aufweist, dass Schraubenlöchern (26) benachbarte Abschnitte der Vertiefung eine größere Tiefe besitzen als Vertiefungsabschnitte, welche zwischen einander benachbarten Schraubenlöchern befindlichen Dichtungsplattenbereichen benachbart sind.

14. Zylinderkopfdichtung nach einem der Ansprüche 1 bis 13, wobei die Dichtungsplatte (10) derart gestaltet ist, dass bei montierter Zylinderkopfdichtung in den Schraubenlochbereichen die Trägerlage (16) und die mindestens eine Funktionslage (12) auf Block verspannt sind.

15. Zylinderkopfdichtung nach einem der Ansprüche 1 bis 14, wobei die Dichtungsplatte (10) den Brennraum-Abdichtsicken (32) zugeordnete, insbesondere zwischen den Letzteren und den Brennraumöffnungen (18, 20, 22, 24) angeordnete Verformungsbegrenzer (182) sowie in Längsendbereichen der Dichtungsplatte angeordnete Zylinderkopf-Abstützelemente (100) aufweist und derart gestaltet ist, dass bei montierter Zylinderkopfdichtung die Elemente der Dichtungsplatte in den Bereichen der Verformungsbegrenzer (182) und der Abstützelemente (100) auf Block verspannt sind.

16. Zylinderkopfdichtung nach einem der Ansprüche 1 bis 15, wobei die Vertiefung (50) einen Querschnitt in Form einer ausgerundeten flachen Mulde aufweist.

17. Abdichtsystem, umfassend mindestens einen Zylinderkopf (62), einen Motorblock (64), Zylinderkopfschrauben (80) und eine zwischen Zylinderkopf und Motorblock eingespannte Zylinderkopfdichtung nach einem der Ansprüche 1 bis 16.

18. Abdichtsystem nach Anspruch 17, wobei die Tiefe (T) der mindestens einen Vertiefung (50) so auf die Halbsicke (34) und die Steifigkeiten sowie die Temperaturausdehnungskoeffizienten von Zylinderkopf (62), Motorblock (64) und Zylinderkopfschrauben (80) abgestimmt ist, dass die Halbsicke im Zuge des Einspannens der Zylinderkopfdichtung im Sinne der Dauerhaltbarkeit der Halbsicke nicht übermäßig abgeflacht wird sowie die Sickenfüße (40, 42) der Halbsicke in streifenförmigen Anlagebereichen überall mit einer für ihr Abdichtvermögen ausreichenden Kraft gegen die Trägerlage (16) und den Zylinderkopf (62) bzw. den Motorblock (64) angepresst sind.

## Claims

1. Cylinder-head gasket having an elongate, multi-layered, metal seal plate (10), which comprises a plurality of combustion-chamber openings (18, 20, 22, 24), fluid-passage openings (28, 30), and screw holes (26) for the passage of cylinder-head screws (80), and at least a first functional layer (12, 14) and also a carrier layer (16), wherein the functional layer is provided with combustion-chamber-sealing beads (32), which surround the combustion-chamber openings, and, on that side of the combustion-chamber-sealing beads which is directed away from the combustion-chamber openings, at a spacing from said beads, with at least one fluid-sealing bead, which is formed as a half-bead (34) having a first bead foot (40) to be pressed against the carrier layer, and a second bead foot (42), spaced apart from the first bead foot by the bead width (B₂), **characterized in that** the carrier layer (16) has, on its first layer side directed towards the first functional layer (12), at least in some regions of the seal plate (10) adjacent to screw holes (26), at least one elongate and shallow depression (50) extending along the first bead foot, said depression being of such a width (B₃) that there lies over the depression (50) only a strip-like region of the first functional layer (12) which comprises only the first bead foot (40) of the half-bead (34) and at most half the bead width (B₂), but not the second bead foot (42).

2. Cylinder-head gasket according to Claim 1, wherein the depression (50) extends over the entire length of the first bead foot (40).

3. Cylinder-head gasket according to Claim 1 or 2, wherein, in a plan view of the seal plate (10), the first bead foot (40) lies above a longitudinal central region of the depression (50).

4. Cylinder-head gasket according to one of Claims 1 to 3, wherein the depth of the region of the depression (50) opposite the first bead foot (40), averaged along the depression, is approximately equal to 4 to 30%, preferably equal to 10 to 25% of the height of the unpressed half-bead (34).

5. Cylinder-head gasket according to one of Claims 1 to 4, wherein the height of the unpressed half-bead (34) is 150 to 250 µm, preferably 180 to 220 µm.

6. Cylinder-head gasket according to one of Claims 1 to 5, wherein the depth of the region of the depression (50) opposite the first bead foot (40), averaged along the depression, is approximately 10 to 60 µm, preferably 10 to 35 µm.

7. Cylinder-head gasket according to one of Claims 1 to 6, wherein the depression (50) is an impression in the carrier layer (16).

8. Cylinder-head gasket according to Claim 7, wherein the carrier layer (16), on its first layer side directed towards the first functional layer (12), on both sides of said depression (50'), has a bulge (60') extending along the depression which bulge protrudes over the first layer side.

9. Cylinder-head gasket according to one of Claims 1 to 8, wherein the carrier layer (16) is mono-layered, at least in a first region opposite the half-bead (34).

10. Cylinder-head gasket according to one of Claims 1 to 9, wherein the carrier layer (16), at least in a first region opposite the half-bead (34), has a greater average material thickness than the strip-shaped region of the functional layer.

11. Cylinder-head gasket according to one of Claims 1 to 10, wherein the half-bead (34) is directly adjacent to the carrier layer (16).

12. Cylinder-head gasket according to one of Claims 1 to 11, wherein the seal plate (10) comprises a second functional layer (14), the carrier layer (16) is arranged between the first and second functional layer (12 and 14, repectively), and the seal plate (10), at least in the region of the half-bead (34), is at least substantially mirror-symmetrical with respect to a central plane extending in the carrier layer.

13. Cylinder-head gasket according to one of Claims 1 to 12, wherein the depression (50) along the first bead foot (40) has a depth (T) that changes in such a way that portions of the depression adjacent to screw holes (26) have a greater depth than portions of the depression adjacent to seal plate regions disposed between adjacent screw holes.

14. Cylinder-head gasket according to one of Claims 1 to 13, wherein the seal plate (10) is constructed in such a way that, when the cylinder-head gasket is installed, the carrier layer (16) and the at least one functional layer (12) are clamped en bloc in the screw hole regions.

15. Cylinder-head gasket according to one of Claims 1 to 14, wherein the seal plate (10) comprises deformation limiters (182) associated with the combustion-chamber-sealing beads (32), in particular between the latter and the combustion-chamber openings (18, 20, 22, 24), and also cylinder-head-supporting elements (100) arranged in longitudinal end regions of the seal plate, and is constructed in such a way that, when the cylinder-head gasket is installed, the elements of the seal plate in the regions of the deformation limiters (182) and the supporting elements (100) are clamped en bloc.

16. Cylinder-head gasket according to one of Claims 1 to 15, wherein the depression (50) has a cross-section in the shape of a rounded shallow trough.

17. Sealing system, comprising at least one cylinder head (62), an engine block (64), cylinder-head screws (80), and, clamped between the cylinder head and engine block, a cylinder-head gasket according to one of Claims 1 to 16.

18. Sealing system according to Claim 17, wherein the depth (T) of the at least one depression (50) is matched to the half-bead (34) and the rigidities and also the temperature expansion coefficients of the cylinder head (62), engine block (64) and cylinder-head screws (80) in such a way that the half-bead, as the cylinder-head gasket is clamped, is not excessively flattened in the sense of the durability of the half-bead, and the bead feet (40, 42) of the half-bead are pressed all over in strip-like bearing regions by means of a force sufficient for the sealing capability of said half-bead, against the carrier layer (16) and the cylinder head (62) or the engine block (64).

## Revendications

1. Joint de culasse avec une plaque d'étanchéité (10) métallique oblongue, multicouche, laquelle présente plusieurs ouvertures de chambre de combustion (18, 20, 22, 24), des ouvertures de circulation de fluide (28, 30) ainsi que des trous de vis (26) pour le passage de vis de culasse (80) et au moins une première couche fonctionnelle (12, 14) ainsi qu'une couche de support (16), dans lequel la couche fonctionnelle est dotée de moulures d'étanchéité de chambre de combustion (32) enveloppant les ouvertures de chambre de combustion ainsi que, sur le côté des moulures d'étanchéité de chambre de combustion opposé aux ouvertures de chambre de combustion et à distance desdites moulures, d'au moins une moulure d'étanchéité de fluide conçue en tant que demi-moulure (34), laquelle moulure d'étanchéité de fluide possède un premier pied de moulure (40) à presser contre la couche de support ainsi qu'un second pied de moulure (42) espacé de ce dernier de la largeur de moulure (B₂), **caractérisé en ce que** la couche de support (16) présente, sur son premier côté de couche tourné vers la première couche fonctionnelle (12), au moins dans quelques régions de la plaque d'étanchéité (10) situées à proximité des trous de vis (26), au moins un renfoncement (50) allongé et plat s'étendant le long du premier pied de moulure avec une telle largeur (B₃), **en ce qu'**au-dessus du renfoncement (50) ne se trouve qu'une région en forme de bande de la première couche fonctionnelle (12), laquelle région contient de la demi-moulure (34) uniquement son premier pied de moulure (40) ainsi que tout au plus la demi-largeur de moulure (B₂), toutefois pas le second pied de moulure (42).

2. Joint de culasse selon la revendication 1, dans lequel le renfoncement (50) s'étend sur toute la longueur du premier pied de moulure (40).

3. Joint de culasse selon la revendication 1 ou 2, dans lequel, dans une vue en plan de la plaque d'étanchéité (10), le premier pied de moulure (40) se trouve au-dessus d'une région centrale longitudinale du renfoncement (50).

4. Joint de culasse selon l'une quelconque des revendications 1 à 3, dans lequel la profondeur moyennée, le long du renfoncement (50), de la région de renfoncement se trouvant en face du premier pied de moulure (40) est environ égale à 4 à 30 %, de préférence égale à 10 à 25 %, de la hauteur de la demi-moulure (34) non pressée.

5. Joint de culasse selon l'une quelconque des revendications 1 à 4, dans lequel la hauteur de la demi-moulure (34) non pressée s'élève de 150 à 250 µm, de préférence de 180 à 220 µm.

6. Joint de culasse selon l'une quelconque des revendications 1 à 5, dans lequel la profondeur moyennée, le long du renfoncement (50), de la région de renfoncement se trouvant en face du premier pied de moulure (40) s'élève environ de 10 à 60 µm, de préférence de 10 à 35 µm.

7. Joint de culasse selon l'une quelconque des revendications 1 à 6, dans lequel le renfoncement (50) est une empreinte dans la couche de support (16).

8. Joint de culasse selon la revendication 7, dans lequel la couche de support (16) présente sur son premier côté de couche tourné vers la première couche fonctionnelle (12), sur les deux côtés du renfoncement (50'), respectivement un boudin (60') s'étendant le long du renfoncement, lequel boudin fait saillie par-dessus le premier côté de couche.

9. Joint de culasse selon l'une quelconque des revendications 1 à 8, dans lequel la couche de support (16) est monocouche au moins dans une première région se trouvant en face de la demi-moulure (34).

10. Joint de culasse selon l'une quelconque des revendications 1 à 9, dans lequel, au moins dans une première région se trouvant en face de la demi-moulure (34), la couche de support (16) présente une épaisseur de matériau moyenne plus grande que la région en forme de bande de la couche fonctionnelle.

11. Joint de culasse selon l'une quelconque des revendications 1 à 10, dans lequel la demi-moulure (34) est à proximité immédiate de la couche de support (16).

12. Joint de culasse selon l'une quelconque des revendications 1 à 11, dans lequel la plaque d'étanchéité (10) présente une seconde couche fonctionnelle (14), la couche de support (16) est agencée entre la première et la seconde couche fonctionnelle (12 et 14) et la plaque d'étanchéité (10) est formée, au moins dans la région de la demi-moulure (34), au moins essentiellement par symétrie spéculaire par rapport à un plan médian se déroulant dans la couche de support.

13. Joint de culasse selon l'une quelconque des revendications 1 à 12, dans lequel le renfoncement (50) présente, le long du premier pied de moulure (40), une profondeur (T) se modifiant de telle sorte que des parties du renfoncement situées à proximité des trous de vis (26) possèdent une profondeur plus grande que des parties de renfoncement, lesquelles sont à proximité de régions de plaques d'étanchéité présentes entre des trous de vis à proximité les uns des autres.

14. Joint de culasse selon l'une quelconque des revendications 1 à 13, dans lequel la plaque d'étanchéité (10) est conçue de telle sorte qu'une fois le joint de culasse monté, dans les régions de trou de vis, la couche de support (16) et ladite au moins une couche fonctionnelle (12) sont serrées à bloc.

15. Joint de culasse selon l'une quelconque des revendications 1 à 14, dans lequel la plaque d'étanchéité (10) présente des limiteurs de déformation (182) affectés aux moulures d'étanchéité de chambre de combustion (32), en particulier agencés entre ces dernières et les ouvertures de chambre de combustion (18, 20, 22, 24), ainsi que des éléments d'appui de culasse (100) agencés dans des régions d'extrémité longitudinales de la plaque d'étanchéité, et est conçue de telle sorte qu'une fois le joint de culasse monté, les éléments de la plaque d'étanchéité dans les régions des limiteurs de déformation (182) et des éléments d'appui (100) sont serrés à bloc.

16. Joint de culasse selon l'une quelconque des revendications 1 à 15, dans lequel le renfoncement (50) présente une section transversale sous la forme d'une cavité arrondie et plate.

17. Système d'étanchéité, comprenant au moins une culasse (62), un bloc-moteur (64), des vis de culasse (80) et un joint de culasse selon l'une quelconque des revendications 1 à 16 encastré entre culasse et bloc-moteur.

18. Système d'étanchéité selon la revendication 17, dans lequel la profondeur (T) dudit au moins un renfoncement (50) est ajustée avec la demi-moulure (34) et les rigidités ainsi que les coefficients de dilatation thermique de culasse (62), bloc-moteur (64) et vis de culasse (80) de telle sorte que dans le cadre de l'encastrement du joint de culasse dans le sens de la durabilité de la demi-moulure, celle-ci ne soit pas excessivement aplatie, ainsi que les pieds de moulure (40, 42) de la demi-moulure dans des régions d'appui en forme de bande soient partout pressés contre la couche de support (16) et la culasse (62) et le bloc-moteur (64) avec une force suffisante pour leur capacité d'étanchéité.
